# EUROPEAN PATENT APPLICATION

(11) **EP 4 672 793 A1**
(43) Date of publication of application: **31.12.2025**
(21) Application number: 24215356.7
(22) Date of filing: 26.11.2024
(51) Int. Cl.: H04W 12/06, H04L 9/40, H04W 12/50, G06F 21/35, H04L 9/08, H04W 4/02, H04W 4/80

(54) **SYSTEM AND METHOD FOR RESETTING PASSWORD**

(30) Priority: 25.06.2024 CN 202410831438
(71) Applicant: Sungrow Charging Technology Co., Ltd., Hefei, Anhui 230088 (CN)
(72) Inventor: Zhang, Lei, Hefei, 230088 (CN); Xia, Wei, Hefei, 230088 (CN); Gong, Jiewen, Hefei, 230088 (CN)
(74) Representative: Epping - Hermann - Fischer

(57) **Abstract**

A system and a method for resetting a password are provided according to the present disclosure, relating to the technical field of information security. The electronic device is configured to send a password resetting instruction to a cloud platform, where the password resetting instruction includes target charging pile information. The cloud platform is configured to send, if the target charging pile information indicates that the electronic device matches with the target charging pile, first information to the electronic device, where the first information includes matching information of the target charging pile. The electronic device is further configured to establish a connection with the target charging pile through a near-field communication technology in response to the first information, and send the password resetting instruction to the target charging pile through a near-field communication channel. The charging pile is configured to reset the password in response to the password resetting instruction.

## Description

### FIELD

The present disclosure relates to the technical field of information security, and in particular to a system and a method for resetting a password.

### BACKGROUND

In a conventional management manner for a charging pile, a user generally installs a specific application (APP) on an electronic device after installing a charging pile, binds the APP to the charging pile, and manages the charging pile through the APP, so as to achieve a convenient charging service. In addition, the user further modifies a default password of the bound charging pile, in order to meet management regulation requirements and to ensure the use security of the charging pile.

However, if the user forgets a modified password after modifying the default password of the charging pile, the charging pile is in an offline state and thus is unable to communicate with the APP. As a result, the user is unable to reset the password to the default password, and the APP fails to communicate with the charging pile, thus failing to use the charging pile for charging.

### SUMMARY

In view of the above problems, a system and a method for resetting a password are provided according to the present disclosure, to cause an electronic device to establish connection with a charging pile through near-field communication, to reset a password of the charging pile.

The following technical solutions are provided according to embodiments of the present disclosure.

In a first aspect, a system for resetting a password is provided according to the present disclosure, the system includes an electronic device, a cloud platform and a charging pile. The electronic device is configured to send a password resetting instruction to the cloud platform, and the password resetting instruction includes information of a target charging pile. The cloud platform is configured to send, if the information of the target charging pile indicates that the electronic device matches with the target charging pile, first information to the electronic device, where the first information includes matching information of the target charging pile. The electronic device is further configured to establish, in response to the first information, a connection with the target charging pile through near-field communication, and send the password resetting instruction to the target charging pile through a near-field communication channel. The charging pile is configured to reset the password in response to the password resetting instruction.

In an embodiment, the cloud platform is further configured to generate the first information if the information of the target charging pile indicates that the electronic device matches with the target charging pile, where the first information further includes first time information, and the first time information is a time instant when the cloud platform receives the password resetting instruction. The electronic device is further configured to establish, in response to the first information, a connection with the target charging pile through the near-field communication, if the matching information of the target charging pile matches with the target charging pile, and the first information meets a preset condition.

In an embodiment, the electronic device is further configured to: acquire second time information, where the second time information is a current time instant; and determine that the first information meets the preset condition, in a case that a time difference between the first time information and the second time information is less than a time threshold.

In an embodiment, the cloud platform is further configured to store the first information corresponding to the target charging pile, where the first information corresponding to the target charging pile is sent to the cloud platform by the target charging pile when being connected to the electronic device for the first time.

In an embodiment, the charging pile is configured to reset the password to a default password in response to the password resetting instruction.

In an embodiment, the charging pile is configured to send a password modification instruction to the electronic device in response to the password resetting instruction.

In an embodiment, the first information includes first prompt information. The electronic device is configured to output the first prompt information in response to the first information, where the first prompt information is used to prompt that the electronic device keeps a preset distance range from the charging pile.

In an embodiment, the electronic device is further configured to output second prompt information if the electronic device is connected to the target charging pile, where the second prompt information is used to prompt that the electronic device keeps the preset distance range from the charging pile for a preset time threshold.

In an embodiment, in a case that a near-field communication function is disabled, the electronic device is further configured to enable, in response to the first information, the near-field communication function.

In a second aspect, a method for resetting a password is provided according to the present disclosure. The method is applied to an electronic device and includes: sending a password resetting instruction to a cloud platform, where the password resetting instruction includes information of a target charging pile, and the information of the target charging pile is used to indicate the target charging pile; receiving first information sent by the cloud platform, where the first information is used to indicate that the electronic device matches with the charging pile, and the first information includes matching information of the target charging pile; and establishing, in response to the first information, connection with the target charging pile through near-field communication, and sending the password resetting instruction to the target charging pile through a near-field communication channel, to cause the charging pile to reset the password.

Compared with the conventional technology, the present disclosure has the following beneficial effects.

According to the embodiments of the present disclosure, a system and a method for resetting a password are provided, solving the problem of failing to reset the password of the charging pile in the offline state. Even if the charging pile is in the offline state, the charging pile can reset the password as long as the electronic device is connected to the charging pile through the near-field communication and sends the password resetting instruction, thereby greatly improving the user experience.

### BRIEF DESCRIPTION OF THE DRAWINGS

For clearer illustration of the technical solutions according to embodiments of the present disclosure or the conventional technology, drawings to be used in embodiments or the conventional technology are briefly described hereinafter. Apparently, the drawings in the following descriptions are only some embodiments of the present disclosure, and those skilled in the art can obtain other drawings from these drawings without any creative effort.
FIG. 1A is a schematic diagram of a system for resetting a password according to an embodiment of the present disclosure;
FIG. 1B is a signaling diagram of a system for resetting a password according to an embodiment of the present disclosure;
FIG. 2 is a signaling diagram of a system for resetting a password according to another embodiment of the present disclosure;
FIG. 3 is a signaling diagram of a system for resetting a password according to another embodiment of the present disclosure; and
FIG. 4 is a flowchart of a method for resetting a password according to an embodiment of the present disclosure.

### DETAILED DESCRIPTION

As described above, the user generally installs a specific APP on an electronic device after installing a charging pile, binds the APP to the charging pile, and manages the charging pile through the APP, so as to achieve a convenient charging service. In addition, the user further modifies a default password of the bound charging pile, in order to meet management regulation requirements and to ensure the use security of the charging pile.

However, if the user forgets a modified password after modifying the default password of the charging pile, the charging pile is in an offline state and thus is unable to communicate with the APP. As a result, the user is unable to reset the password to the default password, and the APP fails to communicate with the charging pile, thus failing to use the charging pile for charging.

Furthermore, if the user reset the password to the default password through a conventional key-press resetting device, identity authentication is not performed. As a result, anyone may perform password resetting on the charging pile, resulting in a low security of password resetting.

A system and a method for resetting a password are provided through research. The electronic device is configured to send a password resetting instruction to a cloud platform, and the password resetting instruction includes information of a target charging pile. The cloud platform is configured to send, if the information of the target charging pile indicates that the electronic device matches with the target charging pile, first information to the electronic device, where the first information includes matching information of the target charging pile. The electronic device is further configured to establish, in response to the first information, a connection with the target charging pile through near-field communication and send the password resetting instruction to the target charging pile through a near-field communication channel. The charging pile is configured to reset the password in response to the password resetting instruction, thus solving the problem of failing to reset the password of the charging pile in the offline state. Even if the charging pile is in the offline state, the charging pile can reset the password as long as the electronic device is connected to the charging pile through the near-field communication and sends the password resetting instruction, thereby greatly improving the user experience. In addition, the near-field communication is achieved by the charging pile interacting with the electronic device at short range, enhancing the security of password resetting. That is because only the user with the electronic device can communicate with the charging pile at short range, thereby effectively reducing the risk of remotely resetting the password.

In order to enable those skilled in the art to better understand the technical solutions according to the present disclosure, the technical solutions according to the embodiments of the present disclosure are described clearly and completely hereinafter with reference to the drawings in the embodiments of the present disclosure. Apparently, the described embodiments are only part of the embodiments according to the present disclosure, rather than all of the embodiments. Based on the embodiments of the present disclosure, all other embodiments obtained by those skilled in the art without any creative effort fall within the protection scope of the present disclosure.

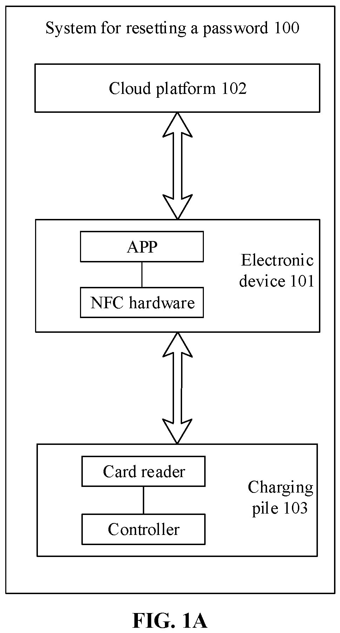

Reference is made to FIG. 1A, which is a schematic diagram of a system for resetting a password according to an embodiment of the present disclosure. The system 100 for resetting a password includes an electronic device 101, a cloud platform 102 and a charging pile 103.

The electronic device 101 is configured to enable a user to interact with the system 100 for resetting a password. The electronic device 101 is provided with an APP and near-field communication (NFC) hardware, so that the user can easily and securely initiate a password resetting operation.

The cloud platform 102 is configured to process a password resetting instruction sent by the electronic device 101. On receipt of the password resetting instruction, the cloud platform 102 verifies information of a target charging pile in the password resetting instruction to ensure that the electronic device 101 matches with the charging pile 103. Once the verification is successful, the cloud platform 102 sends first information to the electronic device 101. The first information includes matching information of the target charging pile, and is used to authorize the electronic device 101 to perform a subsequent password resetting operation.

The charging pile 103 is provided with two key components of a card reader and a controller. The card reader is configured to receive a near-field communication signal from the electronic device 101 and read the password resetting instruction in the near-field communication signal. The controller is configured to parse the password resetting instruction and perform the password resetting operation corresponding to the password resetting instruction.

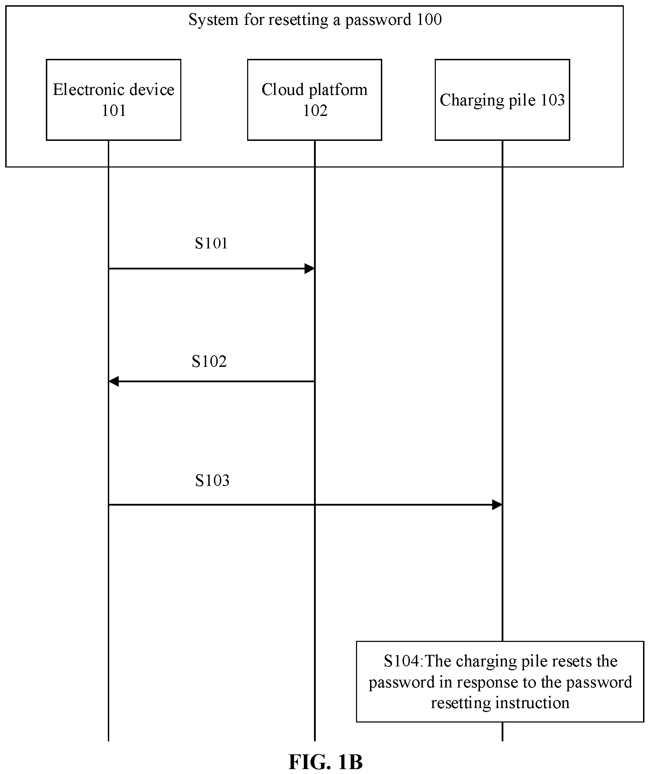

Reference is made to FIG. 1B, which is a signaling diagram of a system for resetting a password according to an embodiment of the present disclosure.

In S101, the electronic device sends a password resetting instruction to the cloud platform, and the password resetting instruction includes information of a target charging pile.

If the user forgets a modified password after modifying the default password of the charging pile 103, the charging pile 103 is in an offline state and thus is unable to communicate with the APP, and the electronic device 101 first sends the password resetting instruction to the cloud platform 102.

The password resetting instruction includes the information of the target charging pile. The information of the target charging pile is used to indicate the unique target charging pile (that is, the charging pile 103). For example, the information of the target charging pile may be ID information of the charging pile or longitude and latitude information of the charging pile. The information of the target charging pile is not limited in the present disclosure.

In S102, the cloud platform sends, if the information of the target charging pile indicates that the electronic device matches with the target charging pile, first information to the electronic device, where the first information includes matching information of the target charging pile.

On receipt of the password resetting instruction, the cloud platform 102 verifies whether the electronic device 101 has a permission to reset the password of the charging pile 103. If the verification is successful, it is indicated that the electronic device matches with the charging pile 103, and the cloud platform 102 sends the first information to the electronic device 101. The first information includes the matching information of the charging pile 103. The matching information is used to inform the electronic device 101 that the electronic device 101 successfully matches with the charging pile 103, and the subsequent password resetting operation is to be performed.

In an embodiment, the cloud platform 102 may verify whether the electronic device 101 has the permission to reset the password of the charging pile 103 by comparing the ID information of the charging pile in the information of the target charging pile with the ID information of the charging pile stored locally in the cloud platform 102. If the ID information of the charging pile in the information of the target charging pile is the same (that is, matching) as the ID information of the charging pile stored locally in the cloud platform 102, it is indicated that the electronic device 101 has the permission to reset the password of the charging pile 103. In this case, the cloud platform 102 sends the first information to the electronic device 101.

In another embodiment, the cloud platform 102 may verify whether the electronic device 101 has the permission to reset the password of the charging pile 103 by comparing the longitude and latitude information in the information of the target charging pile with longitude and latitude information stored locally in the cloud platform 102. If the longitude and latitude information in the information of the target charging pile is the same (that is, matching) as the longitude and latitude information stored locally in the cloud platform 102, it is indicated that the electronic device 101 has the permission to reset the password of the charging pile 103. In this case, the cloud platform 102 sends the first information to the electronic device 101.

It can be understood that, the electronic device 101 matches with the charging pile 103 in the following manner. The cloud platform 102 detects that the electronic device 101 had previously been connected to the charging pile 103, that is, the charging pile 103 is previously controlled by the user currently using the electronic device 101, and such connection of the electronic device 101 and the charging pile 103 may be stored in the cloud platform 102 when the electronic device 101 is connected to the charging pile 103 for the first time. In some embodiments, the electronic device 101 matches with the charging pile 103, that is, an account in the APP on the electronic device 101 matches with the charging pile 103. That is, a user had previously logged in to the APP with the account, and had previously been connected to the charging pile 103 with the account, it is indicated that the account in the APP matches with the charging pile 103.

In S103, the electronic device establishes, in response to the first information, connection with the charging pile through near-field communication, and sends the password resetting instruction to the charging pile through a near-field communication channel.

On receipt of the first information, the electronic device 101 may securely establish communication connection with the charging pile 103 through the near-field communication.

It should be noted that the charging pile 103 is in the offline state and the electronic device 101 is connected to the charging pile 103 through the near-field communication, and thus the S103 is performed on condition that the electronic device 101 is near the charging pile 103. For example, the electronic device 101 is able to establish connection with the charging pile 103 within a circular range with the charging pile 103 as a center and 10 meters as a radius, which is not limited in the present disclosure.

In an embodiment, on receipt of the first information sent by the cloud platform 102, the electronic device 101 may output first prompt information. The first prompt information is used to prompt that the electronic device 101 approaches the charging pile 103, and prompt that the electronic device 101 keeps a preset distance range from the charging pile 103. This is because the electronic device 101 establishes connection with the charging pile 103 through near-field communication only if the electronic device 101 is near the charging pile 103. For example, the preset distance range may be a circular range with the target charging pile as the center and 10 meters as the radius. The preset distance range is not limited in the present disclosure.

It should be noted that the electronic device 101 may output second prompt information if the electronic device 101 is connected to the charging pile 103 through the near-field communication. The second prompt information is used to prompt that the electronic device 101 keeps a preset distance range from the charging pile 103 for a preset time threshold, so as to avoid that the electronic device 101 is disconnected from the charging pile 103 due to an excessive distance. For example, the preset time threshold may be 10 seconds, and is not limited in the present disclosure.

Once the electronic device 101 is connected to the charging pile 103, the electronic device 101 may directly send the password resetting instruction to the charging pile 103 through the near-field communication channel without sending the password resetting instruction though the cloud platform 102.

It should be noted that on receipt of the first information sent by the cloud platform 102, the electronic device 101 may first detect whether a near-field communication function of the electronic device 101 is enabled. If the near-field communication function is disabled, the electronic device 101 automatically enables the near-field communication function and establishes connection with the charging pile 103 based on the near-field communication.

In S104, the charging pile resets the password in response to the password resetting instruction.

In an embodiment, on receipt of the password resetting instruction, the charging pile 103 may reset the modified password as the default password, that is, the password is reset to the default password.

In another embodiment, the charging pile 103 may also send a password modification instruction to the electronic device 101 to allow the user to re-modify the password on the electronic device 101, that is, the password is reset to a modified password again.

It can be understood that restoring the default password is to restore a password of the charging pile to the factory settings. The default password may be found in the operation instruction of the charging pile.

In summary, the system for resetting a password is provided according to the embodiments of the present disclosure, solving the problem of failing to reset the password of the charging pile in the offline state. Even if the charging pile is in the offline state, the charging pile can reset the password as long as the electronic device is connected to the charging pile through the near-field communication and sends the password resetting instruction, thereby greatly improving the user experience.

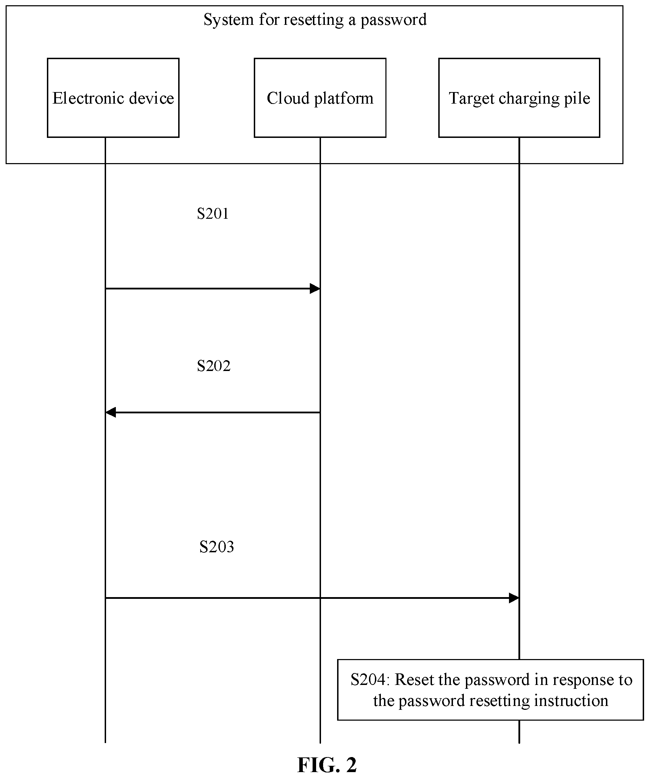

Reference is made to FIG. 2, which is a signaling diagram of a system for resetting a password according to another embodiment of the present disclosure. The system for resetting a password includes an electronic device, a cloud platform and a target charging pile.

In S201, the electronic device sends a password resetting instruction to the cloud platform.

In a case that the user had previously logged in to the APP with the account, the user is unable to use the target charging pile for charging if the user forgets the password logged in to the APP bound to the target charging pile, and the user sends the password resetting instruction to the cloud platform through the APP on the electronic device.

In some embodiments, the user may open and log in to the APP on the electronic device, enter a charging pile management page, and find and click an option "Forgot password" or an option "Reset password" on the charging pile management page. In response to triggering by the user, the APP on the electronic device generates a password resetting instruction and sends the password resetting instruction to the cloud platform through a secure communication channel (such as HTTPS).

The password resetting instruction includes the information of the target charging pile, such as the ID information of the target charging pile, or the longitude and latitude information where the target charging pile is located. The information of the target charging pile is used to indicate the unique target charging pile.

It should be noted that the user had previously logged in to the APP when triggering the electronic device to send the password resetting instruction to the cloud platform. Therefore, it can be seen that only the user previously logged in to the APP, rather than all users, can trigger the electronic device to send the password resetting instruction to the cloud platform, thereby ensuring the security of this operation.

In S202, the cloud platform generates first information and sends the first information to the electronic device, if the information of the target charging pile indicates that the electronic device matches with the target charging pile. The first information includes matching information of the target charging pile and first time information.

On receipt of the password resetting instruction, the cloud platform first verifies whether the information of the target charging pile in the password resetting instruction matches with the target charging pile. If the information of the target charging pile matches with the target charging pile, the cloud platform may generate the first information and send the first information to the electronic device. The first information includes the matching information and the first time information. The matching information is used to inform the electronic device that the electronic device successfully matches with the target charging pile and the subsequent password resetting operation could be performed. The first time information is a time instant when the cloud platform receives the password resetting instruction.

It can be understood that different password resetting instructions received by the cloud platform are different in the first time information, and the cloud platform generates the first information based on the first time information. Therefore, the first information sent by the cloud platform to the electronic device is unique.

It should be noted that the cloud platform may also first process the first information including the matching information and the first time information to obtain virtual card number information, and send the virtual card number information to the electronic device. Similarly, different password resetting instructions received by the cloud platform are different in the first time information, and the cloud platform generates the first information based on the first time information. Therefore, the virtual card number information is also unique. It should be noted that the processing process is not limited in the present disclosure.

In some embodiments, after generating the virtual card number information, the cloud platform may encrypt the virtual card number information by using an encryption algorithm, and send encrypted virtual card number information to the APP on the electronic device. The encryption algorithm is stored in the cloud platform in advance and is used to encrypt the virtual card number information to improve the transmission security of the virtual card number information. In an embodiment, for a charging pile of a manufacturer, the encryption algorithm and the decryption algorithm are unique to the manufacturer, and may be stored in the charging pile in advance. The cloud platform may obtain information of the manufacturer based on the information of the target charging pile, to perform encryption by using the encryption algorithm corresponding to the manufacturer, so that the encrypted information may be directly decrypted after being transmitting to the charging pile of the manufacturer.

In S203, the electronic device establishes, in response to the first information, near-field communication with the target charging pile, and sends the password resetting instruction to the target charging pile, if the matching information of the target charging pile matches with the target charging pile, and the first information meets a preset condition.

In some embodiments, on receipt of the first information, the electronic device first determines whether the first information meets the preset condition. If the first information meets the preset condition, the electronic device establishes, in response to the first information, connection with the target charging pile through the near-field communication, and sends the password resetting instruction to the target charging pile through the near-field communication channel.

In an embodiment, the preset condition is that a time difference between the first time information and second time information in the first information is less than a time threshold. The second time information is a current time instant acquired by the electronic device. If the time difference between the first time information and the second time information is less than the time threshold, it is determined that the first information meets the preset condition.

In an embodiment, on receipt of the first information, the electronic device acquires the current time instant as the second time information.

In an embodiment, after obtaining the current time instant, the electronic device determines whether the time difference between the first time information and the current time instant is less than 10 minutes. If the time difference between the first time information and the second time information is less than 10 minutes, the electronic device establishes near-field communication connection with the target charging pile. It should be noted that the above 10 minutes is only an example, and the time threshold is not limited in the present disclosure.

It can be understood that the first time information is the time instant when the cloud platform receives the password resetting instruction and is considered as a time instant when the user clicks on a password resetting control, and the second time information is the current time instant. Therefore, it is determined whether the password resetting operation by the user is triggered within a recent time period, ensuring the accuracy of resetting the password of the charging pile. It can be understood that the user may had triggered the password resetting operation one hour ago, the password resetting operation is not verified by the cloud platform due to communication failure and no feedback is sent to the electronic device, and the user may currently have no demand for resetting the password. Therefore, if the time difference between the first time information and the second time information exceeds the time threshold, the electronic device does not respond to the first information, that is, the electronic device stops the password resetting operation.

In this embodiment, it is determined whether the time difference is less than the time threshold, enhancing the security of the password resetting operation, thereby preventing the misoperation of unauthorized information or expired information. The electronic device attempts to establish connection with the target charging pile only if the time condition is met, so as to avoid possible malicious attacks or unintended touch.

Once the APP on the electronic device determines to respond to the first information sent by the cloud platform, the electronic device may output first prompt information. The first prompt information is used to prompt that the electronic device approaches the target charging pile, and the electronic device keeps the preset distance range from the target charging pile. This is because the electronic device establishes connection with the target charging pile through the near-field communication only if the electronic device is near the target charging pile. For example, the preset distance range may be a circular range with the target charging pile as the center and 10 meters as the radius. The preset distance range is not limited in the present disclosure.

After establishing the near-field communication with the target charging pile, the electronic device sends the password resetting instruction to the target charging pile. It should be noted that once the electronic device is connected to the target charging pile through the near-field communication, the electronic device outputs second prompt information. The second prompt information is used to prompt that the electronic device keeps the preset distance range from the target charging pile for a preset time threshold, so as to avoid that the electronic device 101 is disconnected from the charging pile 103 due to an excessive distance. For example, the preset time threshold may be 10 seconds, and is not limited in the present disclosure.

It should be noted that on receipt of the first information sent by the cloud platform, the electronic device first detects whether the near-field communication function of the electronic device is enabled. If the near-field communication function is disabled, the electronic device automatically enables the near-field communication function and establishes connection with the target charging pile through the near-field communication.

In S204, the charging pile resets the password in response to the password resetting instruction.

On receipt of the password resetting instruction, the target charging pile resets the password to the default password and informs the user that the default password is reset through the APP on the electronic device. Alternatively, the target charging pile may send a password modification instruction to the APP on the electronic device, and the user modifies the password by entering a new password on the APP on receipt of the password modification instruction.

After the password is reset, the user enters the default password on the APP, or enters the modified password after modifying the password, so as to implement communication connection with the target charging pile.

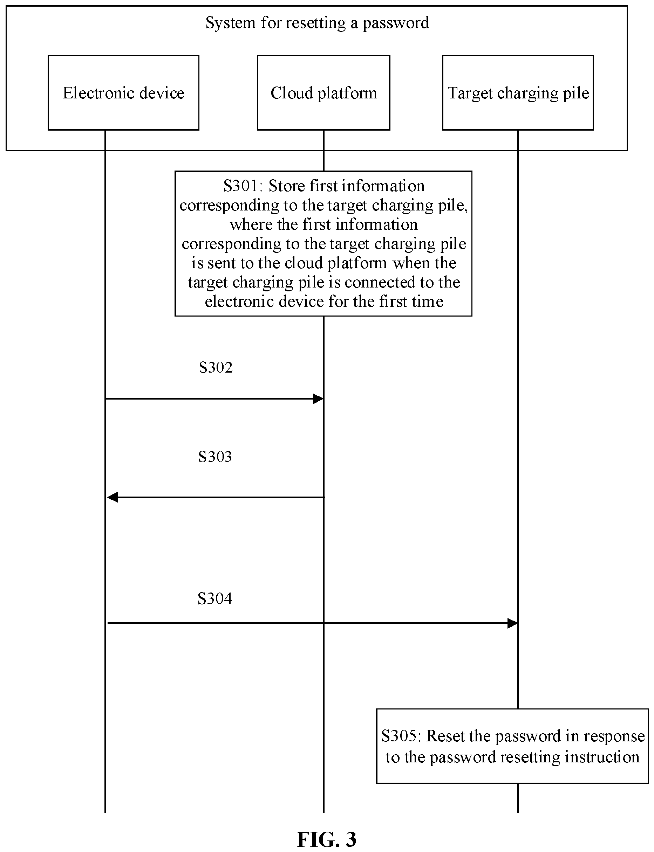

Reference is made to FIG. 3, which is a signaling diagram of a system for resetting a password according to another embodiment of the present disclosure. The system for resetting a password includes an electronic device, a cloud platform and a target charging pile.

In S301, the cloud platform stores the first information corresponding to the target charging pile, where the first information corresponding to the target charging pile is sent to the cloud platform when the electronic device is connected to the target charging pile for the first time.

If the electronic device is connected to the target charging pile for the first time, the target charging pile sends the first information to the cloud platform, and the cloud platform stores the first information for subsequent query and management. The first information may be the information of the target charging pile, the virtual card number information generated based on the information of the target charging pile, or the like. The information of the target charging pile includes the ID information of the target charging pile, or the longitude and latitude information where the target charging pile is located, which is not limited in the present disclosure.

In S302, the electronic device sends the password resetting instruction to the cloud platform.

In a case that the user had previously logged in to the APP with the account, the user fails to use the target charging pile for charging if the user forgets the password logged in to the APP bound to the target charging pile, and the user sends the password resetting instruction to the cloud platform through the APP on the electronic device.

It should be noted that the password resetting instruction in S302 includes an instruction for requesting password resetting, and further includes the information of the target charging pile or the virtual card number information stored in the APP on the electronic device. It can be understood that the information of the target charging pile refers to the ID information of the target charging pile, the longitude and latitude information where the target charging pile is located or the like. The information of the target charging pile is used to indicate the unique target charging pile. The virtual card number information refers to card number information generated based on the information of the target charging pile. The information of the target charging pile is unique, and thus the virtual card number information is also unique, and may indicate the unique target charging pile.

In S303, if the information of the target charging pile or the virtual card number information in the password resetting instruction matches with the first information stored in the cloud platform, the cloud platform sends the matching information to the electronic device.

If the first information stored in the cloud platform matches with the information of the target charging pile or the virtual card number information sent by the electronic device, it is indicated that the electronic device matches with the target charging pile, and the cloud platform sends the matching information to the electronic device.

In S304, the electronic device establishes, in response to the matching information, near-field communication with the target charging pile and sends the password resetting instruction to the target charging pile.

Once the APP on the electronic device determines to respond to the matching information sent by the cloud platform, the electronic device may output the first prompt information. The first prompt information is used to prompt that the electronic device approaches the target charging pile, and to keep a preset distance range from the target charging pile. This is because the electronic device establishes connection with the target charging pile through the near-field communication only if the electronic device is near the target charging pile. For example, the preset distance range may be a circular range with the target charging pile as the center and 10 meters as the radius. The preset distance range is not limited in the present disclosure.

After establishing the near-field communication with the target charging pile, the electronic device sends the password resetting instruction to the target charging pile. In an embodiment, the password resetting instruction includes plaintext data. The plaintext data is used to prompt the target charging pile to start a password resetting program. That is, on receipt of the password resetting instruction, the target charging pile automatically opens the password resetting program, so as to perform the password resetting operation.

After establishing the near-field communication with the target charging pile, the electronic device outputs second prompt information. The second prompt information is used to prompt that the electronic device keeps the preset distance range from the target charging pile for the preset time threshold, so as to avoid that the electronic device is disconnected from the target charging pile due to an excessive distance. For example, the preset time threshold may be 10 seconds, and is not limited in the present disclosure.

It should be noted that on receipt of the matching information sent by the cloud platform, the electronic device may first detect whether the near-field communication function of the electronic device is enabled. If the near-field communication function is disabled, the electronic device automatically enables the near-field communication function and establishes connection with the charging pile through the near-field communication.

In S305, the target charging pile resets the password in response to the password resetting instruction.

In summary, the system for resetting a password is provided according to the embodiments of the present disclosure, solving the problem of failing to directly receive by the charging pile in the offline state, the password resetting instruction from the electronic device. Even if the charging pile is in the offline state, the charging pile can send a password resetting instruction to reset the password as long as the electronic device establishes connection with the charging pile through the near-field communication, thereby greatly improving the user experience. In addition, the near-field communication is achieved by the charging pile interacting with the electronic device at short range, enhancing the security of password resetting. That is because only the user with the electronic device can communicate with the charging pile at short range, thereby effectively reducing the risk of remotely resetting the password.

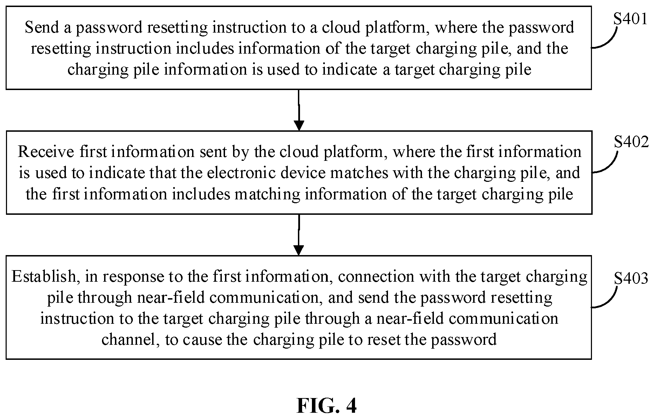

Reference is made to FIG. 4, which is a flowchart of a method for resetting a password according to an embodiment of the present disclosure. The method is applied to the electronic device and includes the following S401 to S403.

In S401, a password resetting instruction is sent to the cloud platform, where the password resetting instruction includes information of the target charging pile, and the information of the target charging pile is used to indicate the target charging pile.

In S402, first information sent by the cloud platform is received, where the first information is used to indicate that the electronic device matches with the charging pile, and the first information includes matching information of the target charging pile.

In S403, the electronic device establishes, in response to the first information, connection with the target charging pile through the near-field communication, and the password resetting instruction is sent to the target charging pile through the near-field communication channel, to cause the charging pile to reset the password.

In summary, the method for resetting a password is provided according to the embodiments of the present disclosure, solving the problem of failing to directly receive by the charging pile in the offline state, the password resetting instruction from the electronic device. Even if the charging pile is in the offline state, the electronic device can send the password resetting instruction to reset the password as long as the electronic device establishes connection with the charging pile through the near-field communication, thereby greatly improving the user experience. In addition, the near-field communication is achieved by the charging pile interacting with the electronic device at short range, enhancing the security of password resetting. That is because only the user with the electronic device can communicate with the charging pile at short range, thereby effectively reducing the risk of remotely resetting the password.

It should be noted that the embodiments in this specification are described in a progressive manner, each of the embodiments emphasizes the differences between the embodiment and other embodiments, and the same or similar parts among the embodiments may be referred to each other. Particularly, since embodiments of the device and system are substantially similar to the embodiments of the method, the embodiments of the device and system are described briefly. For relevant parts, reference may be made to the description of the method. The above embodiments of the device and system are merely illustrative. The units described as separate components may or may not be physically separated, and the component displayed as a unit may or may not be a physical unit, that is, may be located in one place, or may be distributed on multiple network units. Some or all of the modules may be selected as needed to achieve the purpose of the solution of the embodiments. Those skilled in the art can understand and implement the solution without any creative effort.

The above embodiments are only some specific embodiments of the present disclosure, and a protection scope of the present disclosure is not limited thereto. Any changes or replacements that may be easily conceived by those skilled in the art within the technical scope disclosed in the present disclosure should fall within the protection scope of the present disclosure. Hence, the protection scope of the present disclosure should be defined by the protection scope of the claims.

## Claims

1. A system for resetting a password, comprising
an electronic device;
a cloud platform; and
a charging pile, wherein
the electronic device is configured to send a password resetting instruction to the cloud platform, and the password resetting instruction comprises information of a target charging pile;
the cloud platform is configured to send, if the information of the target charging pile indicates that the electronic device matches with the target charging pile, first information to the electronic device, wherein the first information comprises matching information of the target charging pile;
the electronic device is further configured to establish, in response to the first information, a connection with the target charging pile through near-field communication and send the password resetting instruction to the target charging pile through a near-field communication channel; and
the charging pile is configured to reset the password in response to the password resetting instruction.

2. The system according to claim 1, wherein
the cloud platform is further configured to generate the first information if the information of the target charging pile indicates that the electronic device matches with the target charging pile; wherein the first information further comprises first time information, and the first time information is a time instant when the cloud platform receives the password resetting instruction; and
the electronic device is further configured to establish, in response to the first information, a connection with the target charging pile through the near-field communication, if the matching information of the target charging pile matches with the target charging pile and the first information meets a preset condition.

3. The system according to claim 2, wherein the electronic device is further configured to:
obtain second time information, wherein the second time information is a current time instant; and
determine that the first information meets the preset condition, in a case that a time difference between the first time information and the second time information is less than a time threshold.

4. The system according to claim 1, wherein
the cloud platform is further configured to store the first information corresponding to the target charging pile, wherein the first information corresponding to the target charging pile is sent to the cloud platform by the target charging pile when being connected to the electronic device for the first time.

5. The system according to claim 1, wherein the charging pile is further configured to reset the password to a default password in response to the password resetting instruction.

6. The system according to claim 1, wherein the charging pile is further configured to send a password modification instruction to the electronic device in response to the password resetting instruction.

7. The system according to claim 1, wherein the first information comprises first prompt information,
wherein the electronic device is further configured to output the first prompt information in response to the first information, wherein the first prompt information is used to prompt that the electronic device keeps a preset distance range from the charging pile.

8. The system according to claim 7, wherein
the electronic device is further configured to output second prompt information if the electronic device is connected to the target charging pile, wherein the second prompt information is used to prompt that the electronic device keeps the preset distance range from the charging pile for a preset time threshold.

9. The system according to any one of claims 1 to 8, wherein in a case that a near-field communication function is disabled,
the electronic device is further configured to enable, in response to the first information, the near-field communication function.

10. A method for resetting a password, applied to an electronic device, and the method comprising:
sending a password resetting instruction to a cloud platform, wherein the password resetting instruction comprises information of a target charging pile, and the information of the target charging pile is used to indicate the target charging pile;
receiving first information sent by the cloud platform, wherein the first information is used to indicate that the electronic device matches with the charging pile, and the first information comprises matching information of the target charging pile; and
establishing, in response to the first information, a connection with the target charging pile through near-field communication, and sending the password resetting instruction to the target charging pile through a near-field communication channel, to cause the charging pile to reset the password.
